# EUROPEAN PATENT APPLICATION

(11) **EP 4 440 162 A1**
(43) Date of publication of application: **02.10.2024**
(21) Application number: 22900208.4
(22) Date of filing: 04.11.2022
(51) Int. Cl.: H04W 4/14, H04W 4/24

(54) **INTERNATIONAL ROAMING SHORT MESSAGE CHARGING METHOD AND APPARATUS, ELECTRONIC DEVICE, AND STORAGE MEDIUM**

(30) Priority: 03.12.2021 CN 202111467652
(71) Applicant: ZTE Corporation, Shenzhen, Guangdong 518057 (CN)
(72) Inventor: ZHANG, Lei, Shenzhen, Guangdong 518057 (CN); SUN, Libo, Shenzhen, Guangdong 518057 (CN); SUN, Xuezhen, Shenzhen, Guangdong 518057 (CN); HUANG, Xiaobing, Shenzhen, Guangdong 518057 (CN)
(74) Representative: Osterhoff, Utz
(86) International application number: PCT/CN2022/130057
(87) International publication number: WO 2023/098403

(57) **Abstract**

Embodiments of the present application relate to the technical field of communications, and disclose a method for billing international roaming short messages, an apparatus, an electronic device, and a storage medium. The method includes: obtaining a third-party registration message sent by a serving call session control function S-CSCF, the third-party registration message is configured to carry roaming network information of a user, and the third-party registration message is based on a user registration message generation sent from a proxy call session control function P-CSCF; analyzing the roaming network information from the third-party registration message; and in response to that a short message sent by the user is received, sending the roaming network information of the user to a billing system for the billing system to bill the user according to the roaming network information.

## Description

### CROSS-REFERENCE TO RELATED APPLICATIONS

The present application claims priority to Chinese patent application No. 202111467652.2, and filed on December 3, 2021, the entire contents of which are incorporated herein by reference.

### TECHNICAL FIELD

The present application relate to the technical field of communication, and in particular to a method for billing international roaming short messages, an apparatus, an electronic device and a storage medium.

### BACKGROUND

The development of mobile communication has been more than 30 years so far. At present, most operators at home and abroad have completed the deployment of 4G networks and started the construction of 5G networks. The deployment of internet protocol multimedia system (IMS) network based on 4G or 5G core network have also been completed by some operators. At present, 4G users mainly use circuit switched (CS) method to send short messages in international roaming. After the network evolves to 4G or 5G, the CS network will gradually withdraw from the network. The mainstream solution adopted by operators is the IMS-based S8 home routing (S8HR) / N9 home routing (N9HR) scheme. The above solution can meet the international roaming needs of 4G or 5G users.

However, when the above scheme is adopted, the short message center cannot obtain the information of the user's roaming place, and the short message sent by the user in the case of international roaming and the short message sent in the case of non-roaming cannot be billed separately. Therefore, there is a problem that cannot be targeted at the user billing for international roaming short messages.

### SUMMARY

The purpose of the present application is to solve the above problems, provide a method for billing international roaming short messages, an apparatus, an electronic device and a storage medium, and solve the problem that the international roaming short messages of users cannot be billed.

In order to solve the above problems, the embodiment of the present application provides a method for billing international roaming short messages, which is applied to an internet protocol short message gateway (IP-SM-GW), and the method includes: obtaining a third-party registration message sent by a serving call session control function (S-CSCF); the third-party registration message is configured to carry roaming network information of a user, and the third-party registration message is based on a user registration message generation sent from a proxy call session control function (P-CSCF); analyzing the roaming network information from the third-party registration message; and in response to that a short message sent by the user is received, sending the roaming network information of the user to a billing system for the billing system to bill the user according to the roaming network information.

In order to solve the above problems, the embodiment of the present application provides a method for billing international roaming short messages, which is applied to P-CSCF, and the method includes: obtaining roaming network information of the user after receiving a user registration message initiated by a user; adding the roaming network information of the user to the user registration message; sending the user registration message to the S-CSCF after the roaming network information is added, for the S-CSC to send a third-party registration message to the IP-SM-GW; the third-party registration message is configured to carry the roaming network information of the user; and in response to receiving a short message sent by the user by the IP-SM-GW, sending the roaming network information for billing the user to the billing system by the third-party registration message.

In order to solve the above problems, the embodiment of the present application provides an apparatus for billing international roaming short messages, which is applied to IP-SM-GW, and the apparatus includes: a registration message acquisition module configured to obtain a third-party registration message sent by the S-CSCF; the third-party registration message is configured to carry roaming network information of a user, and the third-party registration message is generated based on the user registration message sent by the P-CSCF; a roaming network information analyzing module configured to analyze out the roaming network information from the third-party registration message; and a sending module configured to send the roaming network information of the user to a billing system in response to that a short message sent by the user is received, for the billing system to bill the user according to the roaming network information.

In order to solve the above problems, the embodiment of the present application provides an apparatus for billing international roaming short messages, which is applied to the P-CSCF, and the apparatus includes: a roaming network information acquisition module configured to acquire roaming network information of a user after receiving a user registration message initiated by the user; an adding module configured to add the roaming network information of the user in the user registration message; and a sending module configured to send the user registration message after the roaming network information is added to the S-CSCF, for the S-CSC to send a third-party registration message to the IP-SM-GW; the roaming network information of the user is carried in the third-party registration message; the third-party registration message is configured for the IP-SM-GW to send the roaming network information for billing the user to the billing system when receiving a short message sent by the user.

In order to solve the above problems, the embodiment of the present application also provides an electronic device, and the electronic device includes: at least one processor; and a memory communicatively connected to the at least one processor; the memory stores instructions executable by the at least one processor; the instructions are executed by the at least one processor, so that the at least one processor performs the method for billing international roaming short messages applied to the IP-SM-GW, or the method for billing international roaming short messages applied to the P-CSCF.

In order to solve the above problems, the embodiment of the present application also provides a computer-readable storage medium, storing a computer program; when the computer program is executed by a processor, the method for billing international roaming short messages applied to the IP-SM-GW is performed, or the method for billing international roaming short messages applied to the P-CSCF.

In the embodiment of the present application, by recording the user's roaming network information, and sending the roaming network information to the billing system when the user sends an international roaming short message; the billing system can bill the user according to the roaming network information, so that the billing system can obtain the roaming network information when the user sends an international roaming short message, which solves the problem of being unable to bill for the user's international roaming short message.

### BRIEF DESCRIPTION OF THE DRAWINGS

One or more embodiments are exemplified by the pictures in the corresponding drawings, and these exemplifications do not constitute a limitation to the embodiments. Elements with the same reference numerals in the drawings represent similar elements. Unless otherwise stated, the pictures in the corresponding drawings are not limited to scale.
FIG. 1 is an international roaming short message system based on the S8HR scheme of the 4G network according to an embodiment of the present application.
FIG. 2 is the international roaming short message system based on the N9HR scheme of the 5G network according to an embodiment of the present application.
FIG. 3 is a flowchart of a method for billing international roaming short messages applied to IP-SM-GW according to an embodiment of the present application.
FIG. 4 is a flowchart of IMS registration in a 4G or 5G user international roaming scenario according to an embodiment of the present application.
FIG. 5 is a flowchart of offline billing for sending short messages in the 4G or 5G user international roaming scenario according to an embodiment of the present application.
FIG. 6 is a flowchart of online billing for sending short messages in the 4G or 5G user international roaming scenario according to an embodiment of the present application.
FIG. 7 is a flowchart of the method for billing international roaming short messages applied to P-CSCF according to an embodiment of the present application.
FIG. 8 is an interaction diagram 1 of the method for billing international roaming short messages according to an embodiment of the present application.
FIG. 9 is an interaction diagram 2 of the method for billing international roaming short messages according to an embodiment of the present application.
FIG. 10 is a schematic structural diagram of an apparatus for billing international roaming short messages applied to IP-SM-GW according to an embodiment of the present application.
FIG. 11 is a schematic structural diagram of the apparatus for billing international roaming short messages applied to P-CSCF according to an embodiment of the present application.
FIG. 12 is a schematic structural diagram of an electronic device according to an embodiment of the present application.

### DETAILED DESCRIPTION OF THE EMBODIMENTS

In order to make the purpose, technical solutions and advantages of the embodiments of the present application clearer, various implementations of the present application will be described in detail below in conjunction with the accompanying drawings. However, those skilled in the art can understand that, in each implementation manner of the present application, many technical details are provided for readers to better understand the present application. However, even without these technical details and various changes and modifications based on the following implementation modes, the technical solution claimed in the present application can also be realized.

An embodiment of the present application relates to a method for billing international roaming short messages, which is applied to IP-SM-GW. The method includes: obtaining a third-party registration message sent by S-CSCF; the third-party registration message carries the roaming network information of the user. The third-party registration message is generated based on the user registration message sent by the P-CSCF; the roaming network information is analyzed from the third-party registration message; when the short message sent by the user is received, the user's roaming network information is sent to the billing system to make the billing system bill the user according to the roaming network information.

In the embodiment of the present application, the operator creates an international gateway mobile switching center (IGMSC) dedicated to international roaming of 4G or 5G users. The gateway office includes packet data network gateway/user plane function (P-GW/UPF) and dedicated network elements such as P-CSCF, which are responsible for routing the IMS registration and messages of international roaming users to the user's home IMS network.

The network architecture of the embodiment of the present application includes the following devices: IP-SM-GW, short message service center (SMSC), 4G core gateway equipment serving gateway (S-GW)/P-GW, 5G Core network equipment UPF, 5G network policy control function (PCF), policy control function, 4G network policy and billing rule function policy and billing rule function (PCRF), home subscriber server (HSS) and IMS network equipment P -CSCF, interrogating call session control function (I-CSCF), and S-CSCF, etc.

Among them, IP-SM-GW is mainly configured to record the public land mobile network identification (PLMN ID) of the user roaming network and provide MCC and MNC information to the billing system; SMSC is mainly used for storing, forwarding and retrying terminal short messages; 4G core network equipment S/P-GW is mainly used for routing and forwarding of packet data; PCRF is mainly used for policy control decision-making and functions based on flow billing control; 5G core network equipment UPF mainly performs different user plane processing; PCF mainly provides policy rules for network entities to implement; HSS is mainly responsible for managing user subscription data and mobile user location information; P-CSCF is mainly configured to forward session initialization protocol (SIP) registration request sent by user equipment (UE) to I-CSCF and forward SIP message sent by UE to S-CSCF; I-CSCF is mainly configured to designate an S-CSCF for the user to perform SIP registration and forward SIP request sent by other networks to the S-CSCF; the S-CSCF is mainly configured to process the registration request, make the registration request take effect through the HSS, and interact with various application servers to provide multimedia services.

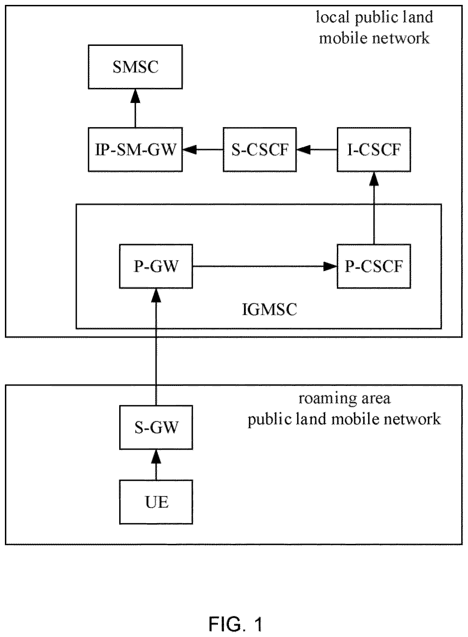

The short message system for international roaming based on the S8HR scheme of the 4G network is shown in FIG. 1. When supporting 4G international roaming, the operator needs to build a dedicated P-GW and P-CSCF for international roaming at the IGMSC. After the 4G user roams to a foreign network, the route for sending short messages is marked with serial numbers in the figure:
UE->S-GW in roaming area->IGMSC P-GW->IGMSC P-CSCF->I-CSCF->S-CSCF->IP-SM-GW->SMSC.

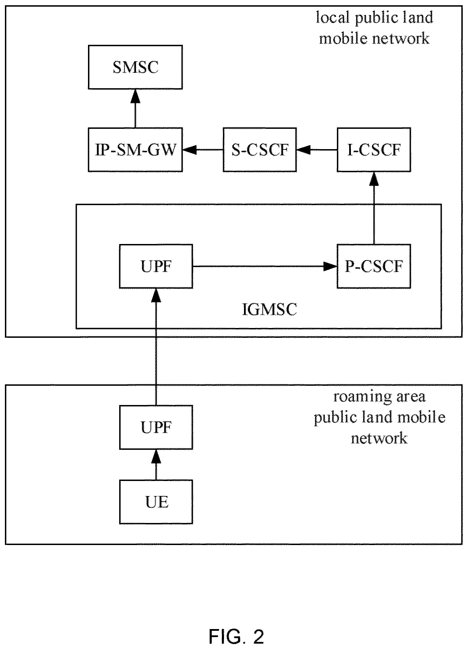

The international roaming short message system based on the N9HR scheme of the 5G network is shown in FIG. 2. When supporting 5G international roaming, operators need to build a dedicated UPF and P-CSCF for international roaming at the IGMSC. After a 5G user roams to a foreign network, the path to send the short message is marked with the sequence number in the figure:
UE->roaming area UPF->IGMSC UPF->IGMSC P-CSCF->I-CSCF->S-CSCF->IP-SM-GW->SMSC.

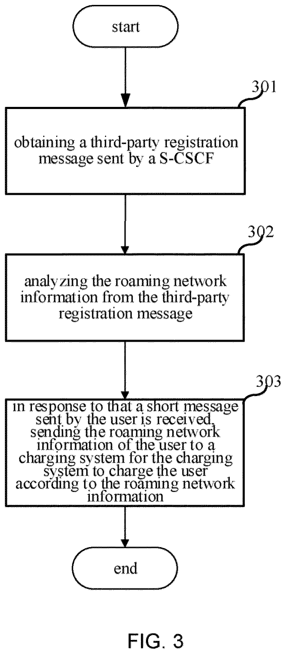

The implementation details of the method in this embodiment are described in detail below, and the following content is only for the convenience of understanding the implementation details of the solution, and is not necessary for implementing the solution. The specific process is shown in FIG. 3, and may include the following steps:
In step 301, a third-party registration message sent by the S-CSCF is acquired; the third-party registration message carries the user's roaming network information, and the third-party registration message is generated based on the user registration message sent by the P-CSCF.

In one example, there is roaming network information in the PVNI header field of the user registration message sent by the P-CSCF, that is, the PLMN ID. The roaming message includes mobile network code (MNC) and mobile country code (MCC).

In one example, the IGMSC P-CSCF transmits the IMS initial registration message carrying the PVNI header field to the user's home S-CSCF, and the IP-SM-GW obtains the third-party IP short message registration message carrying the PVNI header field from the S-CSCF.

In addition, after the IP-SM-GW receives the third-party registration message, it sends a profile update request (PUR) message to the HSS for the HSS to complete the user registration. When the IP-SM-GW receives the profile update answer (PUA) responds sent by HSS, it means that the user registration is successful, and at this time, the IP-SM-GW needs to return a registration response to the S-CSCF.

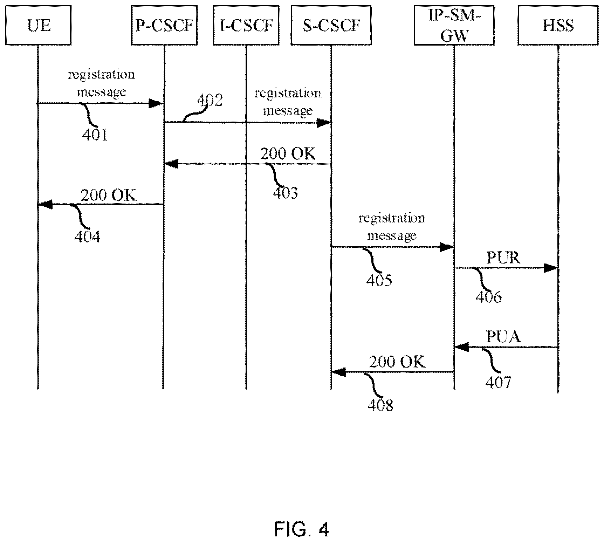

In one example, referring to FIG. 4 for the IMS registration process in the international roaming scenario of a 4G or 5G user, and the specific steps are as follows:
In step 401, the 4G or 5G roaming UE initiates a first-party registration message, and submits it to the IGMSC roaming dedicated P-CSCF via the roaming network.

In step 402, the P-CSCF queries the PCF/PCRF to obtain the PLMNID of the operator where the user roams, fills the information in the header field PVNI of the first-party registration message, and forwards it to the S-CSCF via the I-CSCF.

In step 403, the S-CSCF returns a 200 OK response.

In step 404, the P-CSCF returns a 200 OK response to the UE.

In step 405, the S-CSCF initiates a third-party registration message to the preset IP-SM-GW, carrying PVNI header field information.

In step 406, the preset IP-SM-GW receives a third-party registration message, records roaming network information such as MNC and MCC, and then sends a PUR message to register to the HSS.

In step 407, the HSS returns a PUA response to the IP-SM-GW.

In step 408, the IP-SM-GW returns a third-party registration response to the S-CSCF.

In step 302, roaming network information is analyzed from the third-party registration message.

In an example, the IP-SM-GW analyzes out the MNC and MCC information in the roaming network information from the PVNI header field, and saves them in the local user registration information table.

In step 303, when the short message sent by the user is received, the roaming network information of the user is sent to the billing system for the billing system to bill the user according to the roaming network information.

Specifically, when the user sends an international roaming short message, the IP-SM-GW sends the saved user's roaming network information to the user, so that the billing system can bill for the international roaming short message.

Further, in the case of offline billing, the short message bill file carrying the user's roaming network information is sent to the billing system for the billing system to bill the user according to the user's roaming network information, that is, when the offline billing method is adopted by the operator, the IP-SM-GW queries the registration information of the calling user stored locally, obtains the PLMN ID including the MNC and MCC in the current roaming network information of the user, and generates a short message bill file; The IP-SM-GW transmits the short message bill file with MNC and MCC information to the billing system for the billing system to bill the roaming user.

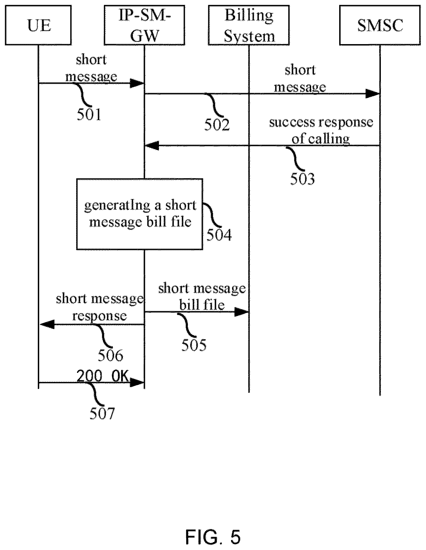

In one example, when the operator adopts the offline billing method, the billing process for sending short messages in the international roaming scenario of 4G or 5G users is shown in FIG. 5, and the specific steps are as follows:
In step 501, the 4G or 5G roaming UE initiates a mobile originate (MO) short message, submits it to the IGMSC through the roaming network, and then forwards it to the user's home IP-SM-GW.

In step 502, the IP-SM-GW forwards the short message to the short message center.

In step 503, the short message center returns a success response of calling.

In step 504, the IP-SM-GW queries the registration information of the calling user stored locally, obtains the PLMNID of the user's current roaming network, including information such as MNC and MCC, and generates a short message bill file.

In step 505, the IP-SM-GW transmits the short message bill file to the billing system.

In step 506, the IP-SM-GW returns a short message call initiation response to the UE.

In step 507, the UE returns a 200 OK response.

Furthermore, in the case of online billing, a billing authentication message carrying the user's roaming network information is sent to the billing system online for the billing system online to bill the user in real time according to the user's roaming network information. That is, when the operator adopts the online billing method, the IP-SM-GW queries the registration information of the calling user stored locally, and obtains the PLMN ID of the user's current roaming network including information such as MNC and MCC; The local MCC and MNC information is added to the billing authentication message of the OCS system, and the billing authentication message carrying the MNC and MCC information is sent to the OCS system for the OCS system to perform real-time billing for roaming users.

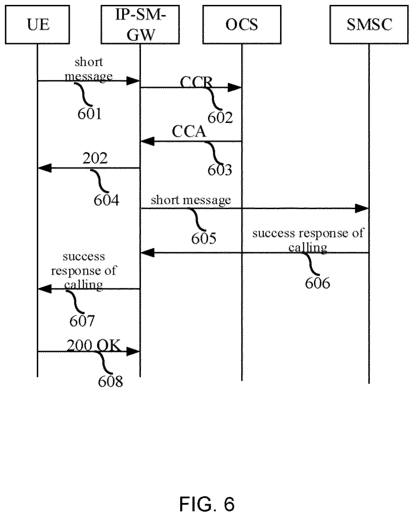

In one example, when the operator adopts the online billing method, the billing process for sending short messages in the international roaming scenario of 4G or 5G users is shown in FIG. 6, and the specific steps are as follows:
In step 601, the 4G or 5G roaming UE initiates a SIP short message, submits it to the IGMSC through the roaming network, and then forwards it to the user's home IP-SM-GW.

In step 602, the IP-SM-GW initiates a credit control request (CCR) to the OCS system, carrying the PLMN ID information of the user's roaming area.

In step 603, the OCS system returns a credit control answer (CCA) response to the IP-SM-GW.

In step 604, if the online billing is successful, the IP-SM-GW returns a 202 success response to the roaming UE.

In step 605, the IP-SM-GW forwards the short message to the short message center.

In step 606, the short message center returns a success response of calling.

In step 607, the IP-SM-GW returns a short message call initiation response to the UE.

In step 608, the UE returns a 200 OK response.

The method for billing international roaming short messages provided by the embodiment of the present application obtains the registration message carrying the user's roaming network information and stores the registration message in the local information list, so that when the user sends the international roaming short message, the user's roaming network information is sent to the short message center, so that the short message center can bill the user's international roaming short message according to the user's roaming network information, thereby avoiding the problem that the short message billing bill generated by the short message sent by the user in the case of international roaming and the short message sent by the user in the case of non-international roaming in the short message center is exactly the same, and the billing of the roaming short message by the short message center is realized.

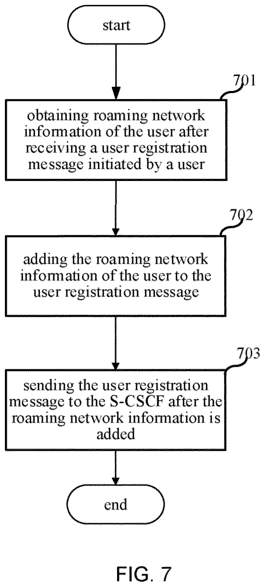

The embodiment of the present application also relates to a method for billing international roaming short messages, applied to a P-CSCF, the method includes:
The implementation details of the method for billing international roaming short messages in this embodiment are described in detail below. The following content is only for the convenience of understanding the implementation details of this solution, and is not necessary for implementing this solution. The specific process is shown in FIG. 7, and may include the following steps:
In step 701, after receiving a user registration message initiated by the user, the roaming network information of the user is acquired.

Specifically, when the operator adopts the international roaming scheme of the HR mode, the roaming network change information of the roaming operator is subscribed to the policy control function PCF or the policy and billing rule function PCRF of the user's home network to obtain the user's roaming network information.

In one example, the P-CSCF obtains the user's roaming network information by subscribing to the PCF/PCRF of the user's home network for the PLMN ID change information of the roaming operator. In the international roaming scenario of a 4G or 5G user, the P-CSCF obtains the process of roaming PLMN ID is as follows, and the specific process is as follows:
First, the P-CSCF of the IGMSC obtains the first party registration message initiated by the 4G or 5G roaming UE; the registration message is submitted to the P-CSCF dedicated for IGMSC roaming through the roaming area network.

Then, the P-CSCF subscribes to the PLMN ID change information of the operator where the user roams from the user's home network PCF/PCRF.

Finally, when the user's roaming network PLMN ID changes, the user's home PCF/PCRF sends the changed PLMN ID information to the P-CSCF.

Furthermore, if the operator adopts the international roaming scheme of local breakout (LB, as opposed to the HR home route, LB is the network breakout service in the local roaming network, and HR is the home breakout service), due to the P-CSCF is located in the roaming area, and the P-CSCF can directly obtain the PLMN ID information of the operator in the user's roaming area, and directly carry the PLMN ID and send it to the user's home network, without performing the operation of PLMN ID change information in the above-mentioned subscription to the user's home network PCF/PCRF.

In step 702, adding the roaming network information of the user in the user registration message;
In one example, after the P-CSCF of the IGMSC receives the IMS initial registration message sent by the international roaming user terminal, the obtained user roaming network information, that is, the PLMN ID information is filled into the PVNI header field of the registration message; PLMN ID information includes MCC and MNC information.

In step 703, sending the user registration message with the roaming network information added to the S-CSCF for the S-CSC to send a third-party registration message to the IP short message gateway IP-SM-GW; the third-party registration message carries the user's roaming network information; the third-party registration message is used for the IP-SM-GW to send roaming network information for billing the user to the billing system when the IP-SM-GW receives the short message sent by the user.

In one example, the IGMSC P-CSCF transmits the IMS initial registration message carrying the user's roaming network information to the user's home S-CSCF, and the S-CSCF transmits the third-party IP short message registration message carrying the user's roaming network information to IP-SM-GW. When a roaming user sends a short message, the IP-SM-GW provides the stored MCC and MNC information to the billing system, and the billing system performs offline or online billing according to the MCC and MNC information.

The method for billing international roaming short messages provided by the embodiment of the present application obtains the user's roaming network information when receiving the user's short message registration message, and adds the user's roaming network information to the short message registration message, and sends the registration message carrying the user's roaming network information to the S-CSCF for the S-CSCF to generate a third-party registration message carrying the user's roaming network information and send it to the IP-SM-GW, so that when the user sends an international roaming short message, the IP-SM-GW can send the obtained user roaming network information to the short message center, so that the short message center can bill the user's international roaming short message according to the user's roaming area information, thereby avoiding the short message billing bill generated by the short message sent by the user in the international roaming situation and the short message sent by the user in the no international roaming situation in the short message center is exactly the same, and realizing the billing of the roaming short message by the short message center.

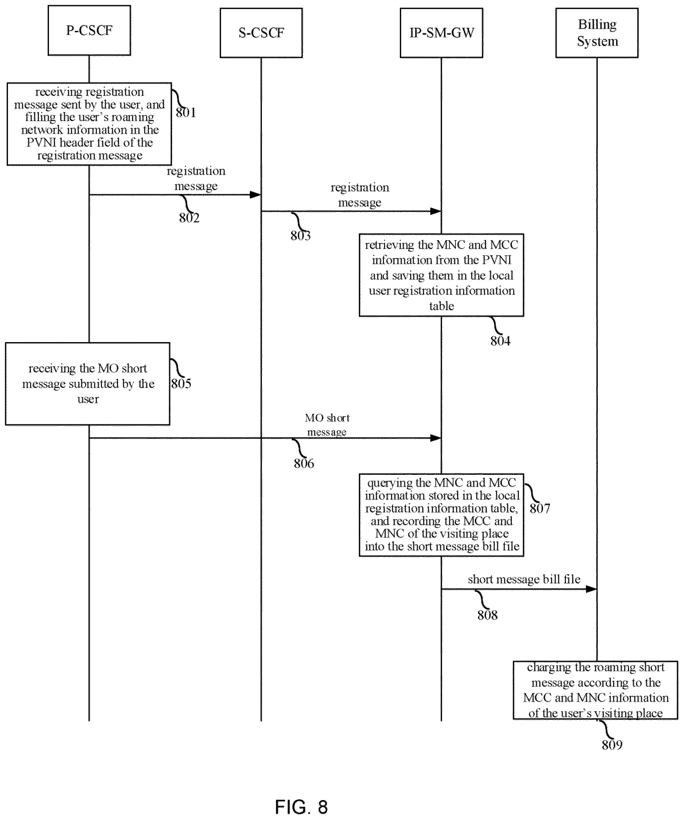

The embodiment of the present application also provides an interactive diagram of a method for billing international roaming short messages, as shown in FIG. 8, and the specific steps are as follows:
In step 801, after receiving the IMS initial registration message sent by the international roaming user terminal through the roaming area network, the P-CSCF of the IGMSC obtains the user's roaming network information, and fills the user's roaming network information including MCC and MNC in the PVNI header field of the registration message.

In step 802, the IGMSC P-CSCF transmits the IMS initial registration message to the user's home S-CSCF.

In step 803, the S-CSCF transmits the third-party IP short message registration message carrying the PVNI header field to the IP-SM-GW.

In step 804, the IP-SM-GW retrieves the MNC and MCC information from the PVNI and saves them in the local user registration information table.

In step 805, the operator's IGMSC P-CSCF receives the MO short message submitted by the international roaming user.

In step 806, the IGMSC P-CSCF forwards the message to the user's home S-CSCF, and the user's home S-CSCF forwards the message to the home IP-SM-GW.

In step 807, after receiving the MO short message submitted by the user, the IP-SM-GW queries the MNC and MCC information stored in the local registration information table, and records the MCC and MNC of the visiting place into the short message bill file.

In step 808, the IP-SM-GW transmits the short message bill file to the billing system.

In step 809, the billing system bills the roaming short message according to the MCC and MNC information of the user's visiting place.

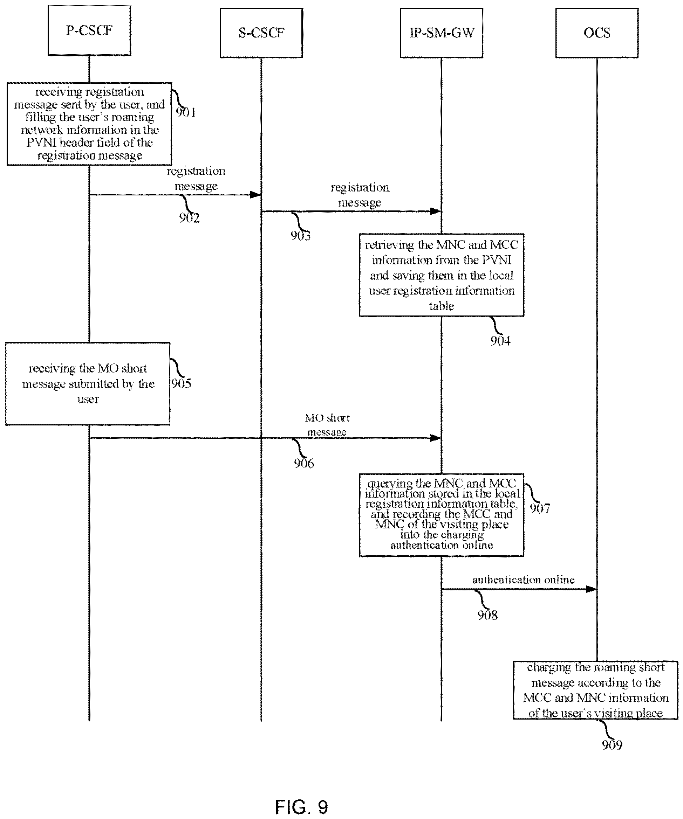

The above example is that the operator uses the offline billing method to bill the user's international roaming short message. When the operator adopts the online billing method, referring to FIG. 9, and the specific steps are as follows:
In step 901, after receiving the IMS initial registration message sent by the international roaming user terminal via the roaming area network, the IGMSC P-CSCF fills in the PVNI header field of the registration message with user roaming network information including MCC and MNC information.

In step 902, the IGMSC P-CSCF transmits the IMS initial registration message to the user's home S-CSCF.

In step 903, the S-CSCF carries the PVNI header field in the third-party IP short message registration message and sends it to the IP-SM-GW.

In step 904, the IP-SM-GW retrieves the MNC and MCC information from the PVNI and saves them in the local user registration information table.

In step 905, the international roaming user submits a message originated (MO) short message, and sends it to the home operator's IGMSC P-CSCF via the roaming network.

In step 906, the IGMSC P-CSCF forwards the message to the user's home S-CSCF, and the user's home S-CSCF forwards the message to the home IP-SM-GW.

In step 907, after receiving the MO short message submitted by the user, the IP-SM-GW queries the MNC and MCC information stored in the local registration information table, and the IP-SM-GW adds the MCC and MNC information of the user's visiting place into the billing authentication message sent to the OCS system.

In step 908, the IP-SM-GW transmits the billing authentication message to the OCS system.

In step 909, the OCS system bills the roaming short message in real time according to the MCC and MNC information of the visiting place.

The method for billing international roaming short messages provided by the embodiment of the present application, in the IMS registration process of the 4G or 5G international roaming user, the preset IP-SM-GW records the PLMN ID of the user's roaming network; when the roaming user sends a short message, the preset IP-SM-GW provides MCC and MNC information to the billing system, and the billing system performs offline or online billing according to the roaming identifier, so that when the user sends an international roaming short message, the IP-SM-GW can send the obtained user's roaming network information to the short message center, so that the short message center can bill the user's international roaming short message according to the user's roaming area information, thereby avoiding that the short message billing bill generated by the short message sent by the user in the case of international roaming and the short message sent by the user in the case of non-international roaming sent in the short message center is exactly the same, and realizing the billing of the roaming short message by the short message center.

The step division of the above various methods is only for the sake of clarity of description. During implementation, it can be combined into one step or some steps can be split and decomposed into multiple steps. As long as they include the same logical relationship, they are all within the scope of protection of the present application; Adding insignificant modifications or introducing insignificant designs to the algorithm or process, but not changing the fact that the core design of the algorithm and process are all within the scope of protection of the present application.

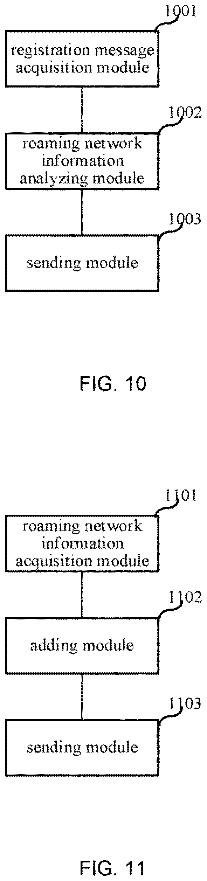

The embodiment of the present application also relates to an apparatus for billing international roaming short messages, which is applied to IP-SM-GW, as shown in FIG. 10, and the apparatus includes: a registration message acquisition module 1001, a roaming network information analyzing module 1002 and a sending module 1003.

Specifically, the registration message acquisition module 1001: obtaining the third-party registration message sent by the S-CSCF; the third-party registration message carries the roaming network information of the user, and the third-party registration message is generated based on the user registration message sent by the P-CSCF; the roaming network information analyzing module 1002: analyzing roaming network information from the third-party registration message; the sending module 1003: sending the user's roaming network information to the billing system in the case of receiving a short message sent by the user for the billing system to bill the user according to the roaming network information.

In one example, the IGMSC P-CSCF transmits the IMS initial registration message carrying the PVNI header field to the user's home S-CSCF, and the registration message acquisition module 1001 obtains the third-party IP short message carrying the PVNI header field from the S-CSCF.

In one example, after receiving the user's registration message, the registration message acquisition module 1001 sends a PUR message to the HSS for the HSS to complete the user's registration. When the IP-SM-GW receives the PUA response sent by the HSS, it indicates that the user has registered successfully, at this time, the IP-SM-GW needs to return a registration response to the S-CSCF.

Further, in the case of offline billing, the sending module 1003 sends to the billing system a short message bill file carrying the user's roaming network information, for the billing system to bill the user according to the user's roaming network information, that is, when the operator adopts the offline billing mode, the sending module 1003 inquires about the registration information of the calling user saved locally, obtains the PLMN ID containing information such as MNC and MCC in the user's current roaming network information, and generates a short message bill file; the sending module 1003 sends the short message bill file with the MNC and MCC information to the billing system for the billing system to bill the roaming user.

Furthermore, in the case of using online billing, the sending module 1003 sends a billing authentication message carrying the user's roaming network information to the billing system online, so that the billing system online can perform real-time billing on the user according to the user's roaming network information. That is, when the operator adopts the online billing method, the IP-SM-GW queries the registration information of the calling user stored locally, and obtains the PLMN ID including information such as MNC and MCC of the user's current roaming network; the MCC and MNC information is added to the billing authentication message of the OCS system by the sending module 1003, and the billing authentication message carrying the MNC and MCC information is sent to the OCS system for the OCS system to perform real-time billing for roaming users.

The apparatus for billing international roaming short messages provided by the embodiment of the present application obtains the third-party registration message carrying the user's roaming network information and stores the registration message in the local information list, so that when the user sends the international roaming short message, the user's roaming area information can be sent to the short message center, so that the short message center can bill the user's international roaming short message according to the user's roaming area information, thereby avoiding that the short message billing bill generated by the short message sent by the user in the case of international roaming and the short message sent by the user in the case of non-international roaming in the short message center is exactly the same, and realizing the billing of the roaming short message by the short message center.

It is not difficult to find that this embodiment is an apparatus embodiment corresponding to the above-mentioned embodiment of the method for billing international roaming short messages applied to IP-SM-GW. The embodiments of the method for billing short messages are implemented in cooperation with each other. The relevant technical details mentioned above in the embodiment of the method for billing international roaming short messages applied to the IP-SM-GW are still valid in this embodiment, and will not be repeated here in order to reduce repetition. Correspondingly, the relevant technical details mentioned in this implementation manner can also be applied to the above embodiment of the method for billing international roaming short messages applied to the IP-SM-GW.

The embodiment of the present application also relates to an apparatus for billing international roaming short messages, which is applied to P-CSCF, as shown in FIG. 11, and the apparatus includes: a roaming network information acquisition module 1101, an adding module 1102 and a sending module 1103.

Specifically, the roaming network information acquisition module 1101: after receiving the user registration message initiated by the user, obtaining the user's roaming network information; the adding module 1102: adding the user's roaming network information in the user registration message; sending module 1103: sending a user registration message with added roaming information to the S-CSCF, for the S-CSCF to send a third-party registration message to the IP-SM-GW; the third-party registration message carries the user's roaming information; the third-party registration message is used for the IP-SM-GW to send the roaming network information used for billing the user to the billing system when receiving the short message sent by the user.

In one example, the roaming network information acquisition module 1101 obtains the roaming area information of the user by subscribing to the PCF/PCRF of the user's home network for the PLMN ID change information of the roaming area operator.

In one example, after receiving the IMS initial registration message sent by the international roaming user terminal, the adding module 1102 fills in the obtained user roaming network information, that is, the PLMN ID information, into the PVNI header field of the registration message; the PLMN ID information includes MCC and MNC information.

In one example, the sending module 1103 sends the IMS initial registration message of the user's roaming network information to the user's home S-CSCF, and the S-CSCF sends the third-party IP short message registration message carrying the user's roaming network information to the IP-SM- GW. When a roaming user sends a short message, the IP-SM-GW provides the stored MCC and MNC information to the billing system, and the billing system performs offline or online billing according to the MCC and MNC information.

The apparatus for billing international roaming short messages provided by the embodiment of the present application obtains the user's roaming network information when receiving the user's short message registration message, and adds the user's roaming network information to the short message registration message, and sends the registration message carrying the user's roaming network information to the S-CSCF for the S-CSCF to generate a third-party registration message carrying the user's roaming network information and send it to the IP-SM-GW, so that when the user sends an international roaming short message, the IP-SM-GW can send the obtained user roaming network information to the short message center, so that the short message center can bill the user's international roaming short message according to the user's roaming area information, thereby avoiding that the short message billing bill generated by the short message sent by the user in the international roaming situation and the short message sent by the user in the non-international roaming situation in the short message center is exactly the same, and realizing the billing of the roaming short message by the short message center.

It is not difficult to find that this embodiment is an apparatus embodiment corresponding to the above-mentioned embodiment of the method for billing international roaming short messages applied to the P-CSCF, and this embodiment can be cooperated with the above-mentioned method for billing international roaming short messages applied to the P-CSCF. The relevant technical details mentioned above in the embodiment of the method for billing international roaming short messages applied to the P-CSCF are still valid in this embodiment, and are not repeated here in order to reduce repetition. Correspondingly, the relevant technical details mentioned in this implementation manner can also be applied to the above-mentioned embodiment of the method for billing international roaming short messages applied to the P-CSCF.

It is worth mentioning that all the modules involved in the above two implementations of the present application are logical modules. In practical applications, a logical unit can be a physical unit, or a part of a physical unit, or realized as a combination of multiple physical units. In addition, in order to highlight the innovative part of the present application, units that are not closely related to solving the technical problems proposed in the present application are not introduced in this embodiment, but this does not mean that there are no other units in this embodiment.

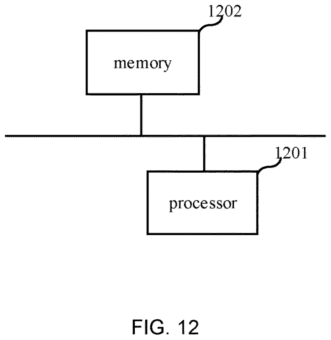

The embodiment of the present application also provides an electronic device, as shown in FIG. 12, and the electronic device includes: at least one processor 1201; and a memory 1202 communicatively connected to the at least one processor 1201; the memory 1202 stores instructions executable by the at least one processor 1201; the instructions are executed by the at least one processor 1201, so that the at least one processor performs the method for billing international roaming short messages applied to the IP-SM-GW, or the method for billing international roaming short messages applied to the P-CSCF.

The memory and the processor are connected by a bus, and the bus may include any number of interconnected buses and bridges, and the bus connects one or more processors and various circuits of the memory together. The bus may also connect together various other circuits such as peripherals, voltage regulators, and power management circuits, all of which are well known in the art and therefore will not be further described herein. The bus interface provides an interface between the bus and the transceivers. A transceiver may be a single element or multiple elements, such as multiple receivers and transmitters, providing means for communicating with various other devices over a transmission medium. The data processed by the processor is transmitted on the wireless medium through the antenna, further, the antenna also receives the data and transmits the data to the processor.

The processor is responsible for managing the bus and general processing, and can also provide various functions, including timing, peripheral interface, voltage regulation, power management, and other control functions. Instead, memory can be configured to store data that the processor uses when performing operations.

The above-mentioned products can execute the method provided in the embodiment of the present application, and have corresponding functional modules and beneficial effects for executing the method. For technical details not described in detail in this embodiment, please referring to the method provided in the embodiment of the present application.

Embodiments of the present application also provide a computer-readable storage medium storing a computer program. The above method embodiments are implemented when the computer program is executed by the processor.

Those skilled in the art can understand that all or part of the steps in the method of the above-mentioned embodiments can be completed by instructing related hardware through a program; the program is stored in a storage medium, and includes several instructions to make a device (which can be a single chip microcomputer, a chip, etc.) or a processor executes all or part of the steps of the methods described in the various embodiments of the present application. The aforementioned storage media includes: U disk, mobile hard disk, read-only memory (ROM), random access memory (RAM), magnetic disk or optical disc, etc., which can store program codes.

The above-mentioned embodiments are provided for those skilled in the art to implement and use the present application. Those skilled in the art can make various modifications or changes to the above-mentioned embodiments without departing from the inventive idea of the present application. Therefore, the scope of protection of the present application is not limited by the above-mentioned embodiments, but should conform to the maximum scope of the innovative features mentioned in the claims.

## Claims

1. A method for billing international roaming short messages, applied to an internet protocol short message gateway (IP-SM-GW), **characterized by** comprising:
obtaining a third-party registration message sent by a serving call session control function (S-CSCF), wherein the third-party registration message is configured to carry roaming network information of a user, and the third-party registration message is based on a user registration message generation sent from a proxy call session control function (P-CSCF);
analyzing the roaming network information from the third-party registration message; and
in response to that a short message sent by the user is received, sending the roaming network information of the user to a billing system for the billing system to bill the user according to the roaming network information.

2. The method for billing international roaming short messages according to claim 1, wherein the sending the roaming network information of the user to the billing system for the billing system to bill the user according to the roaming network information comprises:
in response to that offline billing is adopted, sending a short message bill file carrying the roaming network information of the user to the billing system, for the billing system to bill the user in real time according to the roaming network information of the user; and
in response to that online billing is adopted, sending a billing authentication message carrying the roaming network information of the user to the billing system online, for the billing system online to bill the user in real time according to the roaming network information of the user.

3. The method for billing international roaming short messages according to claim 1, wherein after the obtaining the third-party registration message sent by the S-CSCF, the method further comprises:
sending a profile update request (PUR) message to a home subscriber server (HSS) for the HSS to complete a registration of the user; and
in response to that a profile update answer (PUA) response sent by the HSS is received, indicating that a user registration is successful.

4. The method for billing international roaming short messages according to any one of claims 1 to 3, wherein the roaming network information comprises mobile network code (MNC) information and mobile country code (MCC) information; and
the P-CSCF is placed in an international gateway mobile switching center (IGMSC) dedicated to international roaming of 4G or 5G users.

5. A method for billing international roaming short messages, applied to a proxy call session control function (P-CSCF), **characterized by** comprising:
obtaining roaming network information of the user after receiving a user registration message initiated by a user;
adding the roaming network information of the user to the user registration message;
sending the user registration message to the serving call session control function (S-CSCF) after the roaming network information is added, for the S-CSCF to send a third-party registration message to an internet protocol short message gateway (IP-SM-GW), wherein the third-party registration message is configured to carry the roaming network information of the user; and
in response to receiving a short message sent by the user by the IP-SM-GW, sending the roaming network information for billing the user to the billing system by the third-party registration message.

6. The method for billing international roaming short messages according to claim 5, wherein the obtaining the roaming network information of the user comprises:
in response to that a home routing (HR)-based international roaming scheme is adopted by an operator, obtaining the roaming network information of the user by subscribing to roaming network change information of a roaming operator from a policy control function (PCF) or a policy and billing rule function (PCRF) of a home network of the user.

7. The method for billing international roaming short messages according to claim 5 or 6, wherein:
the roaming network information comprises MNC information and MCC information.

8. An apparatus for billing international roaming short messages, applied to IP short message gateway IP-SM-GW, **characterized by** comprising:
a registration message acquisition module configured to obtain a third-party registration message sent by a serving call session control function S-CSCF, wherein the third-party registration message is configured to carry roaming network information of a user, and the third-party registration message is generated based on the user registration message sent by a proxy call session control function P-CSCF;
a roaming network information analyzing module configured to analyze out the roaming network information from the third-party registration message; and
a sending module configured to send the roaming network information of the user to a billing system in response to that a short message sent by the user is received, for the billing system to bill the user according to the roaming network information.

9. An apparatus for billing international roaming short messages, applied to a proxy call session control function (P-CSCF), **characterized by** comprising:
a roaming network information acquisition module configured to acquire roaming network information of a user after receiving a user registration message initiated by the user;
an adding module configured to add the roaming network information of the user in the user registration message; and
a sending module configured to send the user registration message after the roaming network information is added to the serving call session control function (S-CSCF), for the S-CSCF to send a third-party registration message to an internet protocol short message gateway (IP-SM-GW), wherein the roaming network information of the user is carried in the third-party registration message;
the third-party registration message is configured for the IP-SM-GW to send the roaming network information for billing the user to the billing system when receiving a short message sent by the user.

10. An electronic device, **characterized by** comprising:
at least one processor; and
a memory communicatively connected to the at least one processor;
wherein the memory stores instructions executable by the at least one processor; the instructions are executed by the at least one processor, so that the at least one processor performs the method for billing international roaming short messages according to any one of claims 1 to 4, or the method for billing international roaming short messages according to any one of claims 5 to 7.

11. A computer-readable storage medium, storing a computer program, **characterized in that** when the computer program is executed by a processor, the method for billing international roaming short messages according to any one of claims 1 to 4 is performed, or the method for billing international roaming short messages according to any one of claims 5 to 7.
